# EUROPÄISCHE PATENTSCHRIFT

(11) **EP 1 303 948 B1**
(45) Veröffentlichungstag und Bekanntmachung des Hinweises auf die Patenterteilung: **20.08.2008**
(21) Anmeldenummer: 01943164.2
(22) Anmeldetag: 29.05.2001
(51) Int. Cl.: H04L 12/40, B60R 16/02

(54) **ELEKTRISCHE ANLAGE FÜR EIN KRAFTFAHRZEUG**
ELECTRIC SYSTEM FOR A MOTOR VEHICLE
INSTALLATION ELECTRIQUE POUR UN VEHICULE AUTOMOBILE

(30) Priorität: 19.07.2000 DE 10035037
(43) Veröffentlichungstag der Anmeldung: 23.04.2003
(73) Patentinhaber: ROBERT BOSCH GMBH, 70442 Stuttgart (DE)
(72) Erfinder: EISENHARDT, Harald, 71277 Rutesheim (DE); FALLIANO, Rolf, 71635 Rudersberg (DE)
(86) Internationale Anmeldenummer: PCT/DE2001/002034
(87) Internationale Veröffentlichungsnummer: WO 2002/007389

(56) Entgegenhaltungen:
- DE-C- 4 222 279
- PEHRS J U ET AL: "CAN - DAS SICHERE BUSKONZEPT" ELEKTRONIK, FRANZIS VERLAG GMBH. MUNCHEN, DE, Bd. 40, Nr. 17, 20. August 1991 (1991-08-20), Seiten 96-101, XP000260942 ISSN: 0013-5658

## Beschreibung

Die Erfindung betrifft eine elektrische Anlage für ein Kraftfahrzeug.

Die herkömmlichen, elektrischen Anlagen werden von einem Bordnetz mit einer Versorgungsspannung gespeist und umfassen Sende- und Empfangseinrichtungen für eine Datenübertragung, die mit digitalen Werten ausgeführt wird. Dabei wird insbesondere bei Personen-Kraftwagen ein 12 V-Bordnetz verwendet. Es sind aber insbesondere für zukünftige Personen- Kraftwagen auch zusätzliche 42 V-Bordnetze in Planung, bei denen bei gleicher Leistung der Verbraucher die auftretenden Ströme entsprechend der höheren Bordnetzspannung reduziert sind. Komponenten, die aus einem 12 V-Bordnetz gespeist werden und nur kleine Leistung erfordern, sind aufgrund ihrer Massenproduktion kostengünstiger herstellbar.

Aus der DE 42 22 279 C1 ist eine Anordnung zum Übertragen von Signalen zwischen integrierte Schaltkreisen bekannt, deren Ein- und Ausgänge mit Schutzelementen gegen elektrostatische Entladungen (ESD) versehen sind. Die Signale der Übertragungsleitung haben einen derart verringerten Signalpegelhub, dass bei einem Kurzschluss der Versorgungspotentialanschlüsse diejenigen ESD-Schutzelemente, die in Vorwärtsrichtung orientiert sind, noch nicht leitend sind. Dies wird durch die geeignete Wahl eines Potentials erreicht, an das ein Abschlusswiderstand der Übertragungsleitung angeschlossen ist.

Weiterhin ist aus Pehrs J U et al. "CAN - Das sichere Buskonzept", Elektronik, Franzis Verlag GmbH, München, DE, Bd. 40, Nr. 17, 20. August 1991, Seiten 96-101, XP000260942, ISSN: 0013-5658, bekannt, elektronische Teilsysteme in Kraftfahrzeugen über Bussysteme miteinander zu vernetzen, wobei zur Erhöhung der Sicherheit der Nachrichtenübertragung zwischen den Teilsystemen Kommunikationssysteme, wie beispielsweise der CAN-Bus, mit leistungsfähigen Mechanismen zur Fehlererkennung, -behandlung und - eingrenzung zum Einsatz kommen.

Es ist Aufgabe der Erfindung, eine elektrische Anlage für ein Kraftfahrzeug zu schaffen, in der sowohl Komponenten mit unterschiedlichen Versorgu ngsspannungen auf einer Busleitung eine Datenübertragung untereinander ausführen können, ohne für diese besondere Bussysteme mit Umsetzungen einsetzen zu müssen.

Diese Aufgabe wird nach der Erfindung dadurch gelöst, dass die Anlage ein Bordnetz mit einer ersten Versorgungsspannung und ein Bordnetz mit einer zweiten, höheren Versorgungsspannung umfasst, sowie von der ersten und zweiten Versorgungsspannung gespeiste Sende- und Empfangseinrichtungen, die mit ihren Sendeausgängen und ihren Empfangseingängen an einer gemeinsamen Busleitung angeschaltet oder anschaltbar sind und auf dieser digitale Datensignale austauschen, wobei allen Sendeeinrichtungen und Empfangseinrichtungen ein gemeinsames Daten-Bezugspotential zugeordnet ist, das von einer der beiden Versorgungsspannungen mit gemeinsamen Basispotential über einen Spannungsteiler abgeleitet ist und wobei die beiden Datensignale mit einem unterhalb des Daten-Bezugspotentials liegenden Datenpotential und einem oberhalb des Daten-Bezugspotentials liegenden Datenpotential darstellbar sind.

Bei dieser kombinierten Anlage können die Komponenten optimal ausgesucht werden und durch die Verwendung eines gemeinsamen Basispotentials für beide Bordnetze und eines gemeinsamen Daten-Bezugspotentials für die Datenübertragung können Sende- und Empfangseinrichtungen beider Teilsysteme miteinander in Datenaustausch mit einheitlichen, digitalen Datensignalen treten.

Nach einem Ausführungsbeispiel umfasst die Anlage Sende- und Empfangseinrichtungen für eine Versorgungsspannung von 12 V sowie Sende- und Empfangseinrichtungen für eine Versorgungsspannung von 42 V, die ein gemeinsames Massepotential aufweisen, wobei die Datenübertragung auf ein Daten-Bezugspotential von etwa der halben, ersten Versorgungsspannung bezogen ist. Das Daten-Bezugspotential ist über einen Spannungsteiler von der ersten, kleineren Versorgungsspannung oder von der zweiten, höheren Versorgungsspannunng ableitbar.

Die Datenübertragung für LOW erfolgt nach einer Auslegung mit einem dominanten Sendepegel von < 0,2 • U_{B1} und einem dominanten Empfangspegel < 0,3 • U_{B1}, wobei U_{B1} die erste kleinere Versorgungsspannung U_{B1} darstellt und das Daten-Bezugspotential mit der halben Versorgungsspannung gewählt ist.

Für die Datenübertragung HIGH wird ein rezessiver Sendepegel > 0,8 • U_{B1} und ein rezessiver Empfangspegel von > 0,7 • U_{B1} verwendet, wobei U_{B1} die erste, kleinere Versorgunsspannung U_{B1} darstellt und das Daten-Bezugspotential mit der halben Versorgungsspannung gewählt ist.

Die Datensignale für LOW und HIGH können selbstverständlich auch invertiert werden, wenn Sende- und Empfangseinrichtungen entsprechend ausgelegt werden.

Für das Daten-Bezugspotential kann auch ein üblicher, bei elektronischen Schaltungen bekannter fester Bezugswert von z.B. 5 V gewählt werden.

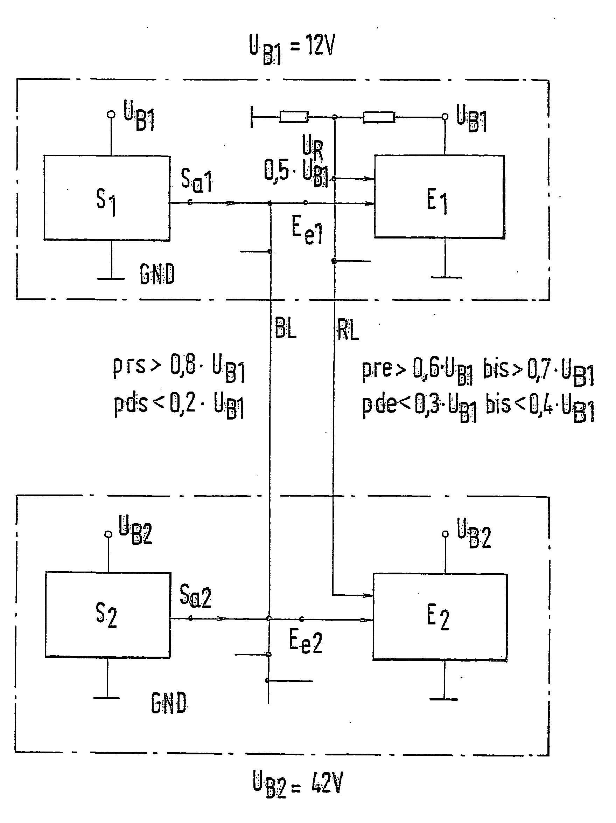

Die Erfindung wird anhand eines in der Zeichnung als Blockschaltbild dargestellten Ausführungsbeispiels näher erläutert.

Wie das Blockschaltbild zeigt, weist eine kombinierte elektrische Anlage nach der Erfindung zwei Bordnetze mit unterschiedlicher Versorgungsspannung U_{B1} von z.B. 12 V und U_{B2} von z.B. 42 V auf.

Im Bordnetz mit der kleineren, ersten Versorgungsspannung U_{B1} sind mehrere Sendeeinrichtungen S₁ und mehrere Empfangseinrichtungen E₁ mit den Sendeausgängen Sₐ₁ und den Empfangseingängen Eₑ₁ an eine gemeinsame Busleitung BL angeschaltet oder anschaltbar. Dabei können die verschiedensten Fahrzeugkomponenten, wie Klimabediengerät, Gebläseregler, Stelleinrichtungen, Sensoren und dgl. als Sende- und/oder Empfangseinrichtung dienen. Diese Einrichtungen werden je nach Auslegung vom Bordnetz mit der Versorgungsspannung U_{B1} oder vom Bordnetz mit der höheren Versorgungsspannung U_{B2} gespeist, wie die Sendeeinrichtungen S₂ und die Empfangseinrichtungen E₂ zeigen. Auch diese Sendeeinrichtungen S₂ und Empfangseinrichtungen E₂ sind mit ihren Sendeausgängen Sₐ₂ und ihren Empfangseingängen Eₑ₂ an die gemeinnsame Busleitung BL angeschaltet oder anschaltbar. Geräte des Fahrzeuges können auch Einrichtungen beider Bordnetze enthalten. Die Versorgungsspannung der Einrichtungen legt ihre Zugehörigkeit zu den Bordnetzen fest. Entscheidend bleibt jedoch, dass beide Bordnetze ein gemeinsames Basispotential aufweisen, das im Ausführungsbeispiel das negative Massepotential GND ist. Selbstverständlich lässt sich die Kombination zweier Bordnetze mit unterschiedlichen Versorgungsspannungen auch bei umgekehrten Potentialen realisieren.

Die Art der Datenübertragung auf der Busleitung BL erfolgt mit digitalen Datensignalen LOW, HIGH, "0" und "1" in verschiedener Codierung. Da die Codierung der Informationen im Rahmen der vorliegenden Erfindung nicht von Bedeutung ist, braucht darauf nicht näher eingegangen zu werden. Entscheidend ist, wie die beiden Datensignale LOW und HIGH bzw. "0" und "1" auf der Busleitung BL dargestellt werden.

Zu diesem Zweck wird den Empfangseinrichtungen E₁ und E₂ beider Bordnetze ein gemeinsames Daten-Bezugspotential U_{R} zugeführt. Im Ausführungsbeispiel wird dieses über einen Spannungsteiler aus der ersten, kleineren Versorgungsspannung U_{B1} abgeleitet und auf die Referenzleitung RL gegeben, von der es den Empfangseinrichtungen E₁ und E₂ zugeführt wird. Nach einer Ausg estaltung kann das Daten-Bezugspotential auf U_{B1/2} gelegt werden und z.B. 6 Volt betragen und sich entsprechend der Spannungsschwankungen der Versorgungsspannung U_{B1} ändern.

Um genügend Sicherheit in der Datenübertragung zu erhalten, werden die Pegel für die Bildung eines dominanten Datensignals LOW oder "0" wie folgt festgelegt:

| | |
|---|---|
| pds = dominanter Sendepegel | < 0,2 • U_{B1} |
| pde = dominanter Empfangspegel | < 0,3 bis 0,4 • U_{B1} |

Dabei ist der dominante Sendepegel pds sowohl für die Sendeeinrichtungen S₁ als auch für die Sendeeinrichtungen S₂ maßgebend. Dasselbe trifft für die Empfangseinrichtungen E₁ und E₂ bezüglich des dominanten Empfangspegels pde zu.

Für die Bildung rezessiver Datensignale HIGH oder "1" werden festgelegt:

| | |
|---|---|
| prs = rezessiver Sendepegel | > 0,8 • U_{B1} |
| pre = rezessiver Empfangspegel | > 0,6 bis 0,7 • U_{B1} |

Diese Pegel sind entsprechend sowohl für die Sendeeinrichtungen S₁ als auch S₂ und sowohl für die Empfangseinrichtungen E₁ als auch E₂ zutreffend.

Man kann auch ein Daten-Bezugspotential U_{R} fest vorgeben. Dies sollte im Bereich von 50 % des minimalen Wertes der kleineren Versorgungsspannung U_{B1} sein. Bei einem üblichen Bordnetz mit einer Versorgungsspannung von 12 V schwankt diese von 9 V bis 16 V, so dass ein Daten-Bezugspotential von + 5 V fest vor-gegeben wird.

Die positiven Datensignale auf der gemeinsamen Busleitung BL werden wie folgt festgelegt und bei der Dimensionierung der Sende- und Empfangseinrichtungen S₁, S₂ und E₁, E₂ berücksichtigt:

| | |
|---|---|
| pds - dominanter Sendepegel | < 0,2 • U_{B1} |
| prs - rezessiver Sendepegel | > 0,8 • U_{B1} |
| pde - dominanter Empfangspegel | < 5 V |
| pre - rezessiver Empfangspegel | > 5 V |

Damit lassen sich mit den festgelegten Sendepegeln die angegebenen Empfangspegel mit erforderlichem Abstand zum Daten-Bezugspotential U_{R} einhalten. Es ist. vorteilhaft, den Empfangsteil mit einer Hysterese zu versehen.

Die Pegel können auch invertiert den Datensignalen HIGH und LOW oder "1" und "0" zugeordnet werden.

## Patentansprüche

1. Elektrische Anlage für ein Kraftfahrzeug mit einem Bordnetz mit einer ersten Versorgungsspannung (U_{B1}) und einem Bordnetz mit einer zweiten, höheren Versorgungsspannung (U_{B2}) sowie mit von der ersten und der zweiten Versorgungspannung (U_{B1}, U_{B2}) gespeisten Sendeeinrichtungen (S₁, S₂) und Empfangseinrichtungen (E₁, E₂), die mit ihren Sendeausgängen (Sₐ₁, Sₐ₂) und ihren Empfangseingängen (Eₑ₁, Eₑ₂) an einer gemeinsamen Busleitung (BL) angeschaltet oder anschaltbar sind und auf dieser digitale Datensignale ("0" und "1") austauschen, wobei allen Sendeeinrichtungen (S₁, S₂) und Empfangseinrichtungen (E₁, E₂) ein gemeinsames Daten-Bezugspotential (U_{R}) zugeordnet ist, das von einer der beiden Versorgungsspannungen (U_{B1}, U_{B2}) mit gemeinsamen Basispotential (GND) über einen Spannungsteiler abgeleitet ist und wobei die beiden Datensignale ("0" und "1") mit einem unterhalb des Daten-Bezugspotentials (U_{R}) liegenden Datenpotential (pds, pde) und einem oberhalb des Daten-Bezugspotentials (U_{R}) liegenden Datenpotentials (prs, pre) darstellbar sind.

2. Elektrische Anlage nach Anspruch 1,
**dadurch gekennzeichnet,**
**dass** sie Sende- und Empfangseinrichtungen (S₁, E₁) für eine erste Versorgungsspannung (U_{B1}) von 12 V und Sende- und Empfangseinrichtungen (S₂, E₂) für eine zweite Versorgungsspannung (U_{B2}) von 42 V umfasst, die ein gemeinsames, negatives Basispotential (GND) aufweisen, und
**dass** die Datenübertragung auf ein Daten-Bezugspotential (U_{R}) von etwa der halben ersten Versorgungsspannung (U_{B1}) bezogen ist.

3. Elektrische Anlage nach einem der vorhergehenden Ansprüche
**dadurch gekennzeichnet,**
**dass** die Datensignale (HIGH = "1") mit einem rezessiven Sendepegel (prs) von > 0,8 • U_{B1} und einem rezessiven Empfangspegel (pre) von >0,7 • U_{B1} festgelegt sind, wobei U_{B1} die erste, kleinere Versorgungsspannung (U_{B1}) darstellt und das Daten-Bezugspotential (U_{R}) mit der halben Versorgungsspannung (U_{B1/2}) gewählt ist.

4. Elektrische Anlage nach einem der Ansprüche 1 oder 2
**dadurch gekennzeichnet,**
**dass** die Datensignale (LOW = "0") mit einem dominanten Sendepegel (pds) von < 0,2 • U_{B1} und einem dominanten Empfangspegel (pde) von < 0,3 • U_{B1} festgelegt sind, wobei U_{B1} die erste, kleinere Versorgungsspannung (U_{B1}) darstellt und das Daten-Bezugspotential (U_{R}) mit der halben Versorgungsspannung (U_{B1/2}) gewählt ist.

5. Elektrische Anlage nach Anspruch 3 und 4,
**dadurch gekennzeichnet,**
**dass** die Datensignale (LOW, HIGH) mit den dominanten und rezessiven Pegeln invertiert sind.

6. Elektrische Anlage nach Anspruch 1,
**dadurch gekennzeichnet,**
**dass** das Daten-Bezugspotential auf ca. 50 % des kleinsten Wertes (z.B. 9 V) der kleineren Versorgungsspannung (U_{B1}) gelegt und mit z.B. 5 V fest vorgegeben ist und
**dass** folgende Sende- und Empfangspegel festgelegt sind:
| | |
|---|---|
| pds - dominanter Sendepegel | < 0,2 • U_{B1} |
| prs - rezessiver Sendepegel | > 0,8 • U_{B1} |
| pde - dominanter Empfangspegel | < 5 V |
| pre - rezessiver Empfangspegel | > 5 V |

7. Elektrische Anlage nach Anspruch 6,
**dadurch gekennzeichnet,**
**dass** der dominante und rezessive Empfangspegel mit einer Hysterese versehen sind.

## Claims

1. Electric system for a motor vehicle having an on-board power system with a first supply voltage (U_{B1}), an on-board power system with a second, higher supply voltage (U_{B2}), and having transmitter devices (S₁, S₂) which are fed by the first and second supply voltages (U_{B1}, U_{B2}), and receiver devices (E₁, E₂) which are connected or can be connected by their transmission outputs (Sₐ₁, Sₐ₂) and their reception inputs (Eₑ₁, Eₑ₂) to a common busline (BL), and exchange digital data signals ("0" and "1") on said busline (BL), wherein all the transmitter devices (S₁, S₂) and receiver devices (E₁, E₂) are assigned a common data reference potential (U_{R}) which is derived from one of the two supply voltages (U_{B1}, U_{B2}) with a common base potential (GND) by means of a voltage divider, and wherein the two data signals ("0" and "1") can be formed with a data potential (pds, pde) below the data reference potential (U_{R}) and a data potential (prs, pre) above the data reference potential (U_{R}).

2. Electric system according to Claim 1, **characterized in that** it comprises transmitter and receiver devices (S₁, E₁) for a first supply voltage (U_{B1}) of 12 V, and transmitter and receiver devices (S₂, E₂) for a second supply voltage (U_{B2}) of 42 V, which have a common negative base potential (GND), and **in that** the data transmission is referred to a data reference potential (U_{R}) of approximately half the first supply voltage (U_{B1}).

3. Electric system according to one of the preceding claims, **characterized in that** the data signals (HIGH = "1") are defined with a recessive transmission level (prs) of > 0.8 • U_{B1} and a recessive reception level (pre) of > 0.7 • U_{B1}, wherein U_{B1} constitutes the first, relatively low supply voltage (U_{B1}), and half the supply voltage (U_{B1/2}) is selected for the data reference potential (U_{R}).

4. Electric system according to one of Claims 1 or 2, **characterized in that** the data signals (LOW = "0") are defined with a dominant transmission level (pds) of < 0.2 • U_{B1} and a dominant reception level (pde) of < 0.3 • U_{B1}, where U_{B1} constitutes the first, relatively low supply voltage (U_{B1}), and half the supply voltage (U_{B1/2}) is selected for the data reference potential (U_{R}).

5. Electric system according to Claims 3 and 4, **characterized in that** the data signals (LOW, HIGH) are inverted with the dominant and recessive levels.

6. Electric system according to Claim 1, **characterized in that** the data reference potential is set to approximately 50% of the lowest value (for example 9 V) of the relatively low supply voltage (U_{B1}) and is permanently predefined as, for example, 5 V, and **in that** the following transmission and reception levels are defined:
| | |
|---|---|
| pds - dominant transmission level | < 0.2 • U_{B1} |
| prs - recessive transmission level | > 0.8 • U_{B1} |
| pde - dominant reception level | < 5 V |
| pre - recessive reception level | > 5 V |

7. Electric system according to Claim 6, **characterized in that** the dominant and recessive reception levels are provided with a hysteresis.

## Revendications

1. Installation électrique pour un véhicule automobile comportant un réseau embarqué ayant une première tension d'alimentation (U_{B1}) et un réseau embarqué avec une seconde tension d'alimentation (U_{B2}) supérieure, ainsi que des installations d'émission (S₁, S₂) alimentées par la première et la seconde tension d'alimentation (U_{B1}, U_{B2}) et des installations de réception (E₁, E₂) dont les sorties d'émission (Sₐ₁, Sₐ₂) et leurs unités de réception (Eₑ₁ Eₑ₂) sont reliées ou peuvent être reliées à une ligne de bus, commune, (BL) en échangeant des signaux numériques de données ("0" et "1"), et toutes les installations d'émission (S₁, S₂) et toutes les installations de réception (E₁, E₂) ayant un potentiel de référence de données (U_{R}), commun, déduit des deux tensions d'alimentation (U_{B1}, U_{B2}) avec un potentiel de base (GND) commun par un diviseur de tension, les deux signaux de données ("0"et "1") sont représentés avec un potentiel de données (pds, pde) situé sous le potentiel de référence de données (U_{R}), et un potentiel de données (prs, pre) situé au-dessus du potentiel de référence de données (U_{R}).

2. Installation électrique selon la revendication 1,
**caractérisée en ce qu'**
elle comporte des installations d'émission et de réception (S₁, E₁) pour une première tension d'alimentation (U_{B1}) de 12 V et des installations d'émission et de réception (S₂, E₂) pour une seconde tension d'alimentation (U_{B2}) de 42 V, ayant un potentiel de base négatif (GND), commun, et
la transmission des données est rapportée à un potentiel de référence de données (U_{R}) correspondant sensiblement à la moitié de la première tension d'alimentation (U_{B1}).

3. Installation électrique selon l'une des revendications précédentes,
**caractérisée en ce que**
les signaux de données (HAUT = "1") avec un niveau d'émission récessif (prs) de > 0,8 • U_{B1} et un niveau de réception récessif (pre) de > 0,7 • U_{B1},
(U_{B1}) étant la première tension d'alimentation la plus petite (U_{B1}), et le potentiel de référence de données (U_{R}) étant choisi égal à la moitié de la tension d'alimentation (U_{B1/2}).

4. Installation électrique selon l'une des revendications 1 à 4,
**caractérisée en ce que**
les signaux de données (BAS = "0") sont fixés avec un niveau d'émission dominant (pds) tel que < 0,2 • U_{B1} et un niveau de réception dominant (pde) de < 0,3 • U_{B1},
la référence (U_{B1}) représentant la première tension d'alimentation (U_{B1}) la plus petite et le potentiel de référence de données (U_{R}) étant choisi égal à la moitié de la tension d'alimentation (U_{B1/2}).

5. Installation électrique selon l'une des 3 et 4,
**caractérisée en ce que**
les signaux de données (BAS, HAUT) sont inversés avec des niveaux dominants et récessifs.

6. Installation électrique selon la revendication 1,
**caractérisée en ce que**
le potentiel de référence de données est prédéfini à environ 50 % de la plus petite valeur (par exemple 9 V) de la plus petite tension d'alimentation (U_{B1}) et est fixé de manière prédéfinie par exemple à 5 V, et les niveaux d'émission et de réception suivants sont fixés comme suit :
| | |
|---|---|
| pds - niveau d'émission dominant | < 0,2 • U_{B1} |
| prs - niveau d'émission récessif | > 0,8 • U_{B1} |
| pde - niveau de réception dominant | < 5 V |
| pre - niveau de réception récessif | > 5 V |

7. Installation électrique selon la revendication 6,
**caractérisée en ce que**
le niveau de réception dominant et le niveau de réception récessif ont de l'hystérésis.
